# EUROPÄISCHE PATENTANMELDUNG

(11) **EP 1 167 117 A2**
(43) Veröffentlichungstag der Anmeldung: **02.01.2002**
(21) Anmeldenummer: 01113490.5
(22) Anmeldetag: 02.06.2001
(51) Int. Cl.: B60N 3/10

(54) **Halter für einen Getränkebehälter zum stehenden Einbau in einem Kraftwagen**

(30) Priorität: 28.06.2000 DE 10031360
(71) Anmelder: fischerwerke Artur Fischer GmbH & Co. KG, 72178 Waldachtal (DE)
(72) Erfinder: Schaal, Falk, 72275 Alpirsbach (DE)

(57) **Zusammenfassung**

Die Erfindung betrifft einen Halter (10) für einen Getränkebehälter zum stehenden Einbau in beispielsweise eine Mittelkonsole eines Kraftwagens. Zur platzsparenden Unterbringung des Halters (10) schlägt die Erfindung vor, diesen mit einem zangenartigen Träger (14) auszubilden, der aus einer versenkten Grundstellung in eine Gebrauchsstellung nach oben schwenkbar ist. Im Träger (14) ist ein ringförmiges Halteteil (22) zum Einstellen des Getränkebehälters angeordnet, das aus einer horizontalen Gebrauchsstellung in eine vertikale Grundstellung schwenkbar ist, so dass der Träger (14) gemeinsam mit dem Halteteil (22) in die Grundstellung versenkbar ist. In einer Weiterbildung schlägt die Erfindung vor, den Halter (10) mit einem zweiteiligen, flächenförmigen Aufstandselement (26, 28) auszubilden, dessen beide Teile (26, 28) zum Versenken des Trägers (14) zusammenklappbar am Träger (14) angeordnet sind (Figur 1).

## Beschreibung

Die Erfindung betrifft einen Halter für einen Getränkebehälter, wie beispielsweise eine Tasse, einen Becher oder eine Getränkedose, der zum stehenden Einbau beispielsweise in eine Mittelkonsole in einem Kraftwagen vorgesehen ist, mit den Merkmalen des Oberbegriffs des Anspruchs 1.

Es sind Halter für Getränkebehälter zum Einbau in ein Armaturenbrett eines Kraftwagens bekannt, die einen Träger aufweisen, der aus einer im Armaturenbrett versenkten Grundstellung in eine aus dem Armaturenbrett vorstehende Gebrauchsstellung schwenk- oder verschiebbar geführt ist. Die Bewegung des Trägers verläuft in etwa senkrecht zum Armaturenbrett, d. h. in einer in etwa horizontalen Bewegungsebene. Der Halter befindet sich in der Bewegungsebene, d. h. er ist in etwa horizontal bzw. liegend angeordnet. Die bekannten Halter weisen ein Halteteil mit einer Einstellöffnung zum Einstellen des Getränkebehälters auf, das einen eingestellten Getränkebehälter seitlich gegen Kippen abstützt. Das Halteteil kann ein vom Halter separates, am Halter angebrachtes Bauteil sein. Auch kann der Halter selbst das Halteteil bilden, er weist in diesem Fall die Einstellöffnung zum Einstellen des Getränkebehälters auf.

Der Erfindung liegt die Aufgabe zu Grunde, einen Halter für einen Getränkebehälter vorzuschlagen, der sich für einen stehenden Einbau in einem Kraftwagen eignet.

Diese Aufgabe wird erfindungsgemäß durch die Merkmale des Anspruchs 1 gelöst. Beim erfindungsgemäßen Halter mit den Merkmalen des Anspruchs 1 ist das die Einstellöffnung aufweisende Halteteil schwenkbar am Träger gehalten. Das Halteteil ist aus einer Grundstellung in eine Gebrauchsstellung und umgekehrt schwenkbar. In der Grundstellung befindet sich das Halteteil in etwa in einer Bewegungsebene des Trägers, in der Gebrauchsstellung steht das Halteteil in einem Winkel zur Bewegungsebene des Trägers, es befindet sich insbesondere in einer horizontalen Ebene, so dass ein Getränkebehälter stehend einstellbar ist. Eine Bewegungsrichtung des Trägers verläuft von unten nach oben, der Träger ist in einer in etwa vertikalen Bewegungsebene und damit in etwa senkrecht zu einer in etwa horizontalen Oberfläche beispielsweise einer Mittelkonsole eines Kraftwagens bewegbar. In der Grundstellung befindet sich das Halteteil in der in etwa vertikalen Bewegungsebene des Trägers. Dadurch lässt sich der erfindungsgemäße Halter schmal ausbilden und platzsparend in beispielsweise eine Mittelkonsole eines Kraftwagens einbauen. Zum Einstellen eines Getränkebehälters in den erfindungsgemäßen Halter wird das Halteteil an dem in die angehobene Gebrauchsstellung bewegten Träger in die in etwa horizontale Gebrauchsstellung geschwenkt, in der ein Getränkebehälter in die Einstellöffnung des Halteteils einstellbar ist. Der erfindungsgemäße Halter hat den Vorteil, dass er platzsparend in beispielsweise einer Mittelkonsole eines Kraftwagens einbaubar ist.

Die Führung des Trägers kann als Schiebeführung ausgebildet sein. Bei einer Ausgestaltung der Erfindung weist der Träger eine Schwenklagerung als Führung auf.

Das Halteteil mit der Einstellöffnung für den Getränkebehälter ist bei einer Ausgestaltung um etwa 90° aus der in der Bewegungsebene des Trägers befindlichen Grundstellung in eine horizontale Gebrauchsstellung schwenkbar. Ist die Bewegungsebene des Trägers vertikal, so ist der Schwenkwinkel des Halteteils 90° . Ist die Bewegungsebene des Trägers nicht exakt vertikal, sondern etwas geneigt, kann der Schwenkwinkel des Halteteils von 90° abweichen.

Bei einer Ausgestaltung der Erfindung weist das Halteteil einen unterbrochenen Teilring auf, der einen eingestellten Getränkebehälter auf einem Teil seines Umfangs umschließt. Ein Umschlingungswinkel ist größer als 180°, so dass der Teilring den eingestellten Getränkebehälter seitlich in allen Richtungen gegen Umkippen stützt. Das Halteteil mit einem unterbrochenen Teilring anstelle eines Vollrings auszubilden hat den Vorteil, dass der Teilring kleiner als ein Vollring ist, wodurch sich der Platzbedarf des erfindungsgemäßen Halters verringert. Weiterer Vorteil eines unterbrochenen Teilrings ist, dass eine Tasse mit einem Henkel einstellbar ist, wobei sich der Henkel in der Unterbrechung des Teilrings befindet.

Bei einer Ausgestaltung der Erfindung weist der Halter ein flächenförmiges Aufstandselement auf, auf dem ein in den Halter eingestellter Getränkebehälter steht. Um auch das Aufstandselement platzsparend unterzubringen, ist dieses ebenfalls schwenkbar am Träger angebracht. Das Aufstandselement lässt sich aus einer Grundstellung, in der es sich in der Bewegungsebene des Trägers befindet, in eine horizontale Gebrauchsstellung und umgekehrt schwenken. In der horizontalen Gebrauchsstellung ist ein Getränkebehälter durch die Einstellöffnung des Halteteils auf das Aufstandselement stellbar.

In Weiterbildung der Erfindung ist das Aufstandselement zweiteilig ausgebildet, wobei die beiden Teile in entgegengesetzte Richtungen schwenkbar am Träger angebracht sind. Die zweiteilige Ausbildung des Aufstandselements hat ebenfalls den Vorteil eines verringerten Platzbedarfs, ein Raum den das Aufstandselement beim Schwenken überstreicht ist bei zweiteiliger Ausbildung des Aufstandselement verringert.

Die Erfindung wird nachfolgend anhand eines in der Zeichnung dargestellten Ausführungsbeispiels näher erläutert. Es zeigen:
- Figuren 1 bis 3: einen erfindungsgemäßen Halter in unterschiedlichen Stellungen in perspektivischer Darstellung; und
- Figuren 4 und 5: den Halter aus Figuren 1 bis 3 in Seitenansicht in unterschiedlichen Darstellungen.

Der in der Zeichnung dargestellte, erfindungsgemäße Halter 10 ist zum stehenden, d. h. vertikalen Einbau in beispielsweise eine nicht dargestellte Mittelkonsole eines Kraftwagens mit in etwa horizontaler Oberfläche vorgesehen. Der Halter 10 weist ein flaches Gehäuse 12 auf, dessen Seitenwände die Form von Viertelkreissegmenten haben. Im Gehäuse 12 ist ein zangenförmiger Träger 14 gelagert, der zwei mit Abstand voneinander angeordnete Schenkel 16, 18 aufweist. Einer der beiden Schenkel 16 weist in etwa die halbe Länge des anderen Schenkels 18 auf. Bei geschlossenem Halter 10 (nicht dargestellt) verschließt der lange Schenkel 18 das Gehäuse 12 an der Oberseite.

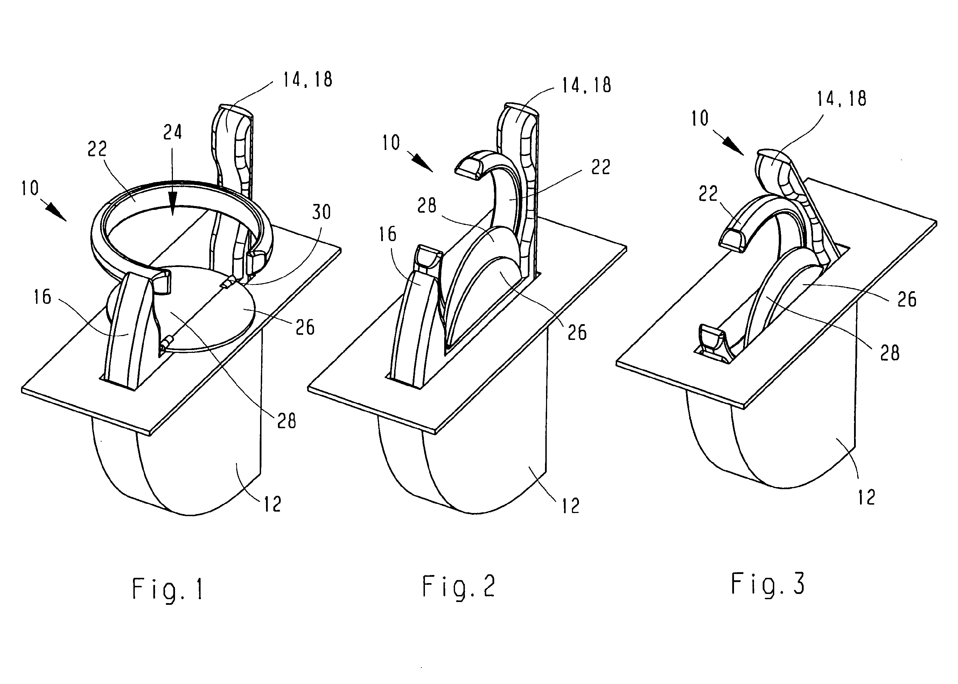

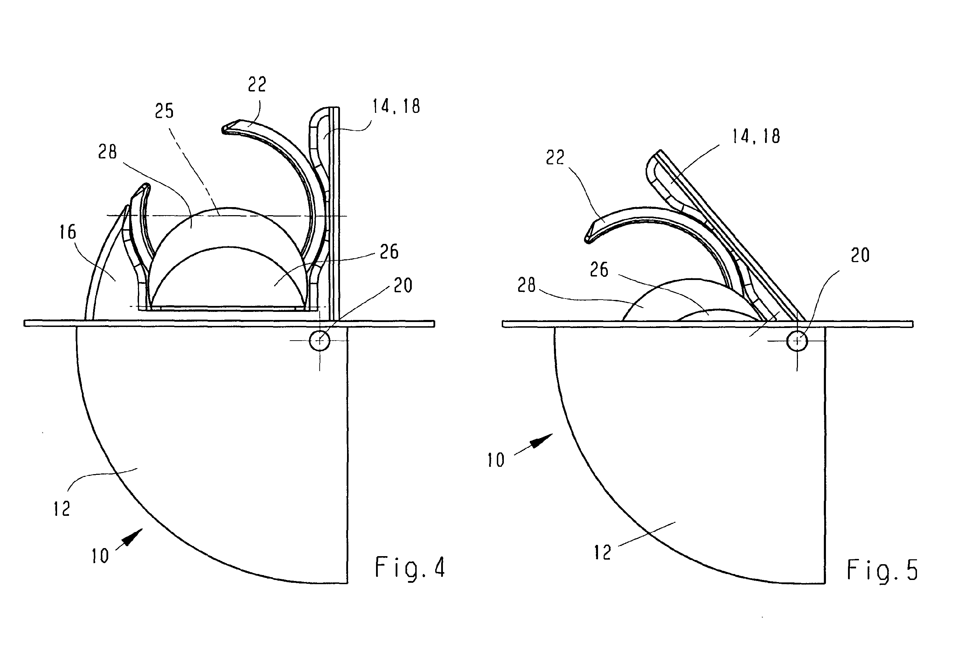

Zur schwenkbaren Verbindung des Trägers 14 mit dem Gehäuse 12 weist der Träger 14 zwei seitlich abstehende Zapfen 20 auf, die in Lagerlöcher in den Seitenwänden des Gehäuses 12 einliegen. Die in den Lagerlöchern einliegenden Schwenkzapfen 20 bilden eine Schwenklagerung oder allgemeiner eine Führung des Trägers 14 am Gehäuse 12. Die Schwenkzapfen 20 sind in einem Fußbereich des langen Schenkels 18 am Träger 14 angeordnet. Durch die Schwenklagerung 20 lässt sich der Träger 14 aus einer im Gehäuse 12 befindlichen, versenkten Grundstellung (nicht dargestellt) in die in Figuren 1 und 4 dargestellte, angehobene Gebrauchsstellung und umgekehrt verschwenken. In der Gebrauchsstellung stehen die Schenkel 16, 18 des Trägers 14 vertikal nach oben aus dem Gehäuse 12 vor.

Zwischen den beiden Schenkeln 16,18 ist ein Halteteil 22 drehbar gelagert angeordnet. Das Halteteil 22 ist als an einer Stelle seines Umfangs unterbrochener Teilring ausgebildet, der sich in Umfangsrichtung über etwa dreiviertel eines Vollkreises erstreckt. Das Halteteil 22 umschließt eine Einstellöffnung 24 zum Einstellen eines nicht dargestellten Getränkebehälters wie beispielsweise eines Bechers, einer Tasse oder einer Getränkedose. Eine Schwenkachse 25 (Figur 4) des Halteteils 22 verläuft senkrecht zu einer durch die Schwenklagerung 20 definierte Schwenkachse des Trägers 14. In der in Figuren 1 und 4 dargestellten Gebrauchsstellung des Trägers 14 verläuft die Schwenkachse 25 des Halteteils 22 horizontal. Zur Schwenklagerung weist das Halteteil 22 zwei einander gegenüberliegend angeordnete, radial nach außen abstehende, in der Zeichnung nicht sichtbare Schwenkzapfen auf, die in Lagerlöchern in den Schenkeln 16, 18 des Trägers 14 einliegen. Die Lagerlöcher befinden sich an einem freien Ende des kurzen Schenkels 16 und in der Mitte des langen Schenkels 18 des Trägers 14, d. h. bei in der Gebrauchsstellung befindlichem Träger 14 in gleicher Höhe. Durch die Schwenklagerung lässt sich das Halteteil 22 in die in Figur 1 dargestellte, horizontale Gebrauchsstellung schwenken, wenn sich der Träger 14 in seiner Gebrauchsstellung befindet. Bei Nichtgebrauch lässt sich das Halteteil 22 in eine vertikale Grundstellung schwenken, wie sie in Figuren 2 bis 5 dargestellt ist. In der Grundstellung befindet sich das Halteteil 22 in einer Ebene mit den Schenkeln 16, 18 des Trägers 14 und in einer Bewegungsebene des Trägers 14. Die Bewegungsebene des Trägers 14 ist durch dessen Schwenklagerung 20 im Gehäuse 12 festgelegt, die Bewegungsebene des Trägers 14 ist senkrecht zu der durch die Schwenklagerung 20 des Trägers 14 definierte Schwenkachse. Ist das Halteteil 22 in seine Grundstellung verschwenkt, lässt sich der Träger 14 gemeinsam mit dem an ihm angebrachten Halteteil 22 in seine Grundstellung in das Gehäuse 12 hinein verschwenken. In der Grundstellung verläuft der lange Schenkel 18 des Trägers 14 horizontal und deckt das Gehäuse 12 an dessen Oberseite bündig ab.
Figuren 3 und 5 zeigen eine Zwischenstellung zwischen der Gebrauchs- und der Grundstellung des Trägers 14, aus der das Verschwenken des Trägers 14 aus der angehobenen Gebrauchs- in die versenkte Grundstellung erkennbar ist.

Der erfindungsgemäße Halter 10 weist ein flächenförmiges Aufstandselement 26, 28 auf. In der Gebrauchsstellung befindet sich das Aufstandselement 26, 28 in einer horizontalen Ebene mit Abstand unterhalb des Halteteils 22, so dass ein in die Einstellöffnung 24 des Halteteils 22 eingestellter Getränkebehälter auf dem Aufstandselement 26, 28 steht. Das Aufstandselement 26, 28 ist zweiteilig ausgebildet, wobei die beiden Teile 26, 28 des Aufstandselements 26, 28 sich zu einer Vollkreisscheibe ergänzen. Dabei ist eines der beiden Teile 26 kleiner als ein Halbkreis und das andere Teil 28 entsprechend größer. Mit einer Schwenkzapfenverbindung 30 sind die beiden Teile 26, 28 des Aufstandselements um eine gemeinsame Schwenkachse schwenkbar. Die Schwenkachse der beiden Teile 26, 28 des Aufstandselements verläuft parallel zur und mit Abstand unterhalb der Schwenkachse 25 des Halteteils 22. In der Gebrauchsstellung des Halters 14 verläuft die Schwenkachse der beiden Teile 26, 28 des Aufstandselements horizontal. Die Schwenkzapfenverbindung 30 der beiden Teile 26, 28 des Aufstandselements ist in einem Fußbereich der Schenkel 16, 18 des Halters 14 angeordnet. Bei Nichtgebrauch werden die beiden Teile 26, 28 des Aufstandselements wie in Figur 2 dargestellt vertikal nach oben stehend geschwenkt, so dass sie sich zwischen den Schenkeln 16, 18 des Halters 14 befinden. Wird auch das Halteteil 22 in seine vertikale Grundstellung verschwenkt, lässt sich der Halter 14 wie oben beschrieben in seine in das Gehäuse 12 versenkte Grundstellung nach unten schwenken.

## Patentansprüche

1. Halter für einen Getränkebehälter zum stehenden Einbau in einem Kraftwagen, mit einem Träger, mit einer Führung, mit der der Träger aus einer versenkten Grundstellung in eine angehobene Gebrauchsstellung und umgekehrt bewegbar geführt ist, und mit einem am Träger angebrachten Halteteil, das eine Einstellöffnung zum Einstellen eines Getränkebehälters aufweist, **dadurch gekennzeichnet, dass** das Halteteil (22) schwenkbar am Träger (14) gehalten ist und aus einer Grundstellung, in der sich das Halteteil (22) in etwa in einer Bewegungsebene des Trägers (14) befindet, in eine Gebrauchsstellung, in der das Halteteil (22) eine zumindest näherungsweise horizontale Lage einnimmt, und umgekehrt, schwenkbar ist.

2. Halter nach Anspruch 1, **dadurch gekennzeichnet, dass** die Führung des Trägers (14) ein Schwenklager (20) aufweist.

3. Halter nach Anspruch 1, **dadurch gekennzeichnet, dass** das Halteteil (22) um etwa 90° aus einer in etwa vertikalen Grundstellung in eine horizontale Gebrauchsstellung schwenkbar ist.

4. Halter nach Anspruch 1, **dadurch gekennzeichnet, dass** das Halteteil (22) einen unterbrochenen Teilring (22) aufweist, der einen eingestellten Getränkebehälter in Umfangsrichtung auf über 180° umschließt.

5. Halter nach Anspruch 1, **dadurch gekennzeichnet, dass** der Halter (10) ein flächenförmiges Aufstandselement (26, 28) aufweist, auf dem in einer Gebrauchsstellung ein in den Halter (10) eingestellter Getränkebehälter steht, wobei das Aufstandselement (26, 28) aus einer Grundstellung, in der es sich in der Bewegungsebene des Trägers (14) befindet, in eine horizontale Gebrauchsstellung und umgekehrt schwenkbar am Träger (14) angebracht ist.

6. Halter nach Anspruch 5, **dadurch gekennzeichnet, dass** das Aufstandselement (26, 28) zweiteilig ist, wobei die beiden Teile (26, 28) in entgegengesetzte Richtungen schwenkbar sind.
